# DEMANDE DE BREVET EUROPEEN

(11) **EP 1 354 924 A2**
(43) Date de publication de la demande: **22.10.2003**
(21) Numéro de dépôt: 03290948.3
(22) Date de dépôt: 16.04.2003
(51) Int. Cl.: C09J 5/00, C09J 7/02, B29C 65/48

(54) **Procédé d'assemblage de pièces et compositions utiles à cette fin**

(30) Priorité: 19.04.2002 FR 0204937
(71) Demandeur: Bostik Findley, 92800 Puteaux (FR)
(72) Inventeur: Morer, Jean-Louis, 91170 Viry Chatillon (FR); Morer, Jean-Louis, 91170 Viry Chatillon (FR)
(74) Mandataire: Cabinet Hirsch

(57) **Abrégé**

L'invention a pour objet un procédé d'assemblage de deux pièces (1, 3) entre elles par collage, comprenant les étapes suivantes: (i) fourniture de la première pièce (1); et (ii) fourniture, sur ladite première pièce (1), d'un cordon ou profilé adhésif (2) comprenant en surface une peau d'adhésif thermofusible (HMA) non-tackante à froid; et (iii) fourniture de la seconde pièce (3) et affichage sur ladite première pièce (1); et (iv) avant, pendant ou après l'étape (iii) activation du cordon ou profilé adhésif (2) pour coller les pièces entre elles.

L'invention a encore pour objet certains cordons ou profilés spécifiques.

## Description

L'invention a pour objet un procédé d'assemblage de pièces et des compositions utiles à cette fin.

On connaît divers procédés d'assemblage de pièces entre elles, notamment par collage. Un exemple concret et non-limitatif d'application est l'assemblage de pièces dans l'industrie automobile. Ainsi, pour les portières par exemple on colle une feuille, moussée ou non, sur la pièce métallique emboutie. Cette feuille a notamment une fonction d'isolation phonique et thermique. Par ailleurs, d'autres pièces sont assemblées avec un objectif d'étanchéité à l'air, l'eau et les poussières.

Dans le cas des portières par exemple, on fournit dans un premier temps la feuille métallique emboutie, on applique un cordon d'adhésif et on vient afficher la feuille intermédiaire (moussée ou non) et on maroufle ensuite la feuille intermédiaire pour assurer un assemblage par collage efficace. Ce cordon adhésif est fourni en général de deux manières. Selon le premier cas il s'agit d'un cordon d'auto-adhésif permanent (dit aussi Hot-Melt Pressure-Sensitive Adhesive ou HMPSA) avec une pellicule de protection pelable, telle qu'un papier siliconé. Un exemple connu d'un tel cordon de HMPSA est le cordon "butyle", à savoir un cordon à base de PIB (polyisobutylène), protégé par une feuille silicone. Cette protection silicone doit ensuite être retraitée, ce qui pose de nombreux problèmes en termes de rebuts industriels sur site et de protection de l'environnement. Selon le second cas il s'agit de fournir un HMPSA sous forme fondue, ce qui nécessite un fondoir et donc une installation spécifique. Ceci pose le problème de la mise en place de l'installation et de son coût tant d'acquisition que de maintenance. Ce problème est encore plus sensible avec les joints moussés pour étanchéité, notamment à base de Hot-Melt Polyuréthanne Réactif (HMPUR), lesquels requièrent un dispositif de moussage encore plus élaboré, dans la mesure où le joint HMPUR est préalablement moussé en ligne à chaud à l'application.

On recherche donc un procédé d'assemblage qui ne nécessite pas d'installation spécifique pour sa mise en oeuvre ainsi qu'une grande souplesse d'utilisation, par exemple pour une application d'étanchéité par joints moussés ou non, et qui ne produise pas de sous-produit du type pellicule silicone pelable dont il faut se débarrasser et retraiter.

L'invention fournit donc un procédé d'assemblage de deux pièces entre elles par collage, comprenant les étapes suivantes:
(i) fourniture de la première pièce; et
(ii) fourniture, sur ladite première pièce, d'un cordon ou profilé adhésif comprenant en surface une peau d'adhésif thermofusible (HMA) non-tackante à froid; et
(iii) fourniture de la seconde pièce et affichage sur ladite première pièce; et
(iv) avant, pendant ou après l'étape (iii) activation du cordon ou profilé adhésif pour coller les pièces entre elles.

Selon un mode de réalisation, l'étape d'activation est mise en oeuvre par soudure miroir.

Selon un mode de réalisation, l'étape d'activation est mise en oeuvre par projection d'un fluide chaud.

Selon un mode de réalisation, l'étape d'activation est mise en oeuvre par effet Joule ou induction.

Selon un mode de réalisation, l'étape d'activation comprend la circulation d'un fluide chaud dans le cordon creux.

Selon un mode de réalisation, l'étape d'activation est mise en oeuvre par perçage mécanique de la peau d'adhésif thermofusible ou HMA.

Selon un mode de réalisation, l'étape d'activation est mise en oeuvre après l'étape (iii).

Selon un mode de réalisation, le cordon ou profilé adhésif est constitué d'adhésif thermofusible (HMA) et d'auto-adhésif (HMPSA).

L'invention fournit aussi le cordon ou profilé adhésif pour la mise en oeuvre du procédé selon l'invention.

Selon un mode de réalisation, le cordon ou profilé adhésif comprend du centre vers l'extérieur:
(i) une âme centrale;
(ii) une couche moussée;
(iii) une couche d'auto-adhésif ou HMPSA; et
(iv) une peau d'adhésif thermofusible ou HMA non-tackante à froid.

Selon un mode de réalisation, le cordon ou profilé adhésif comprend du centre vers l'extérieur:
(i) une âme centrale;
(ii) une couche d'auto-adhésif ou HMPSA; et
(iii) une peau d'adhésif thermofusible ou HMA non-tackante à froid.

Selon un mode de réalisation, le cordon ou profilé adhésif comprend du centre vers l'extérieur:
(i) une âme centrale moussée;
(ii) une couche d'auto-adhésif ou HMPSA; et
(iii) une peau d'adhésif thermofusible ou HMA non-tackante à froid.

Selon un mode de réalisation, l'âme centrale, revêtue ou non, est constituée d'un matériau métallique, plastique, animal, végétal, minéral, carboné ou d'un assemblage de ces matériaux.

Selon un mode de réalisation, l'âme centrale est métallique et ductile.

Selon un mode de réalisation, l'âme centrale est un câble, un ruban, une tresse, un toron, un tube avec une ou plusieurs lumières, une structure moussée, ou un profilé de section plus ou moins complexe.

Selon un mode de réalisation, le cordon ou profilé adhésif est constitué d'adhésif thermofusible (HMA) et d'auto-adhésif (HMPSA).

Selon un mode de réalisation, le cordon ou profilé adhésif est creux.

Selon un mode de réalisation, la peau d'adhésif thermofusible ou HMA est compatible et miscible à chaud avec la couche d'auto-adhésif ou HMPSA.

Selon un mode de réalisation, l'âme centrale présente une section homothétique de celle du cordon ou profilé.

Selon un mode de réalisation, le grammage total d'adhésif thermofusible (HMA) et d'auto-adhésif (HMPSA) est compris entre 10³ et 20.10³ g/m2.

Selon un mode de réalisation, l'épaisseur de la peau en HMA (4) est comprise entre 100 et 500 microns, de préférence entre 100 et 200 microns.

Selon un mode de réalisation, le rapport pondéral HMA(peau)/HMPSA n'excède pas 10 %.

L'invention a encore pour objet un procédé de fabrication de cordon ou profilé adhésif selon l'invention par (co)extrusion ou enduction.

L'invention est maintenant décrite plus en détails dans la description qui suit et en référence aux dessins annexés, dans lesquels:
- la figure 1 représente un exemple concret et non-limitatif de deux pièces assemblées entre elles par le procédé selon l'invention;
- les figures 2 à 4 représentent des modes de réalisation des cordons et profilés adhésifs selon l'invention.

De façon générale, le procédé selon l'invention est mis en oeuvre comme suit. On fournit une première pièce 1, par exemple une feuille emboutie du type portière. Cette pièce est traditionnellement en métal. Il est cependant entendu qu'elle pourrait être en un matériau composite à base de résine chargée. De façon générale, l'invention trouve à s'appliquer à tout type de support, et de façon non limitative: thermoplastiques, thermodurcissables, minéraux (verre), carbonés, métalliques, végétaux et composites.

Un cordon ou profilé 2 est appliqué sur la pièce 1. Les cordons sont de préférence dévidés à partir d'une bobine (sur laquelle il est livré). L'opérateur ou le robot applique le cordon ou profilé et le coupe à la dimension voulue.

La seconde pièce 3 est ensuite affichée sur la pièce 1. Cette pièce 3 est, dans le cas de la portière automobile donnée à titre d'exemple, une feuille polymère qui peut être moussée ou non. A titre d'exemple de polymère constitutif d'une telle feuille, on peut citer le polyéthylène.

Le cordon ou profilé adhésif 2 est activé pour coller les pièces 1 et 3 entre elles. Cette activation peut être mise en oeuvre avant, pendant ou après l'étape d'affichage. Cette étape d'activation peut être de nature variable et a pour but de rendre la surface du cordon ou profilé collant entre les pièces.

Il est possible d'activer le cordon ou profilé par soudure miroir (à savoir mise en regard avec un fer soudant ayant la forme du cordon soudant). Cette soudure miroir peut être mise en oeuvre avant ou après affichage de la pièce 3, de préférence après. Ce type d'activation trouve son application pour tout type de cordon ou profilé.

Il est possible d'activer le cordon ou profilé par projection d'un fluide chaud (notamment air chaud) sur le cordon ou profilé, directement ou indirectement par l'intermédiaire de la pièce 3. Ce fluide chaud peut être fourni par une buse chauffante. A la différence de l'art antérieur, le cordon ou profilé n'est pas appliqué à l'état fondu à partir d'un fondoir (éventuellement portatif); il est fondu après application. La projection de fluide chaud peut se faire avant et/ou après affichage de la pièce 3. Ce type d'activation trouve son application pour tout type de cordon.

Il est possible d'activer le cordon ou profilé par effet Joule ou induction. Ce type d'activation trouve son application pour tout cordon ou profilé ayant une âme centrale métallique. L'activation par effet Joule ou induction peut se faire avant ou après affichage de la pièce 3, de préférence après.

Il est possible d'activer le cordon ou profilé par circulation d'un fluide chaud (notamment air chaud) dans le cordon ou profilé lorsque ce dernier est creux. La circulation de fluide chaud peut se faire avant, pendant ou après affichage de la pièce 3, de préférence pendant et/ou après. Ce type d'activation trouve son application pour tout cordon ou profilé creux.

Il est possible d'activer mécaniquement le cordon ou profilé par perçage mécanique de la peau de thermofusible ou HMA. Ce type de mise en oeuvre est approprié lorsque la pièce 1 et/ou 3 présente une surface susceptible de provoquer le perçage de la couche de HMA. Par exemple, des picots peuvent être présents sur une de ces pièces (par exemple aussi pour faciliter la mise en place du cordon adhésif) et l'affichage de la pièce 3 sur la pièce 1 va provoquer la pénétration des picots dans le cordon ou profilé et finalement l'adhésion par le PSA au centre du cordon sur ces picots. Ce type d'activation est en particulier mis en oeuvre pendant l'étape d'affichage dans la mesure où l'affichage et l'activation mécanique sont concomitantes.

Plusieurs types d'activation peuvent être combinés entre eux, si nécessaire. On peut par exemple combiner une activation mécanique et une activation par soudure ou à effet Joule.

On note que dans tous les cas, il n'y a pas besoin d'avoir recours à un appareillage compliqué et coûteux, à la différence de l'art antérieur. Ceci est particulièrement avantageux dans le cas des cordons moussés pour joints d'étanchéité.

Les cordons ou profilés selon l'invention, notamment avec âme centrale, peuvent avoir des longueurs et sections de géométrie variables. Ils peuvent être circulaires, ou avoir une forme de profilés plus ou moins plats ou présenter toute section appropriée plus ou moins complexe. Les cordons ou profilés selon l'invention présentent en général un diamètre externe (ou un diamètre externe équivalent si la section n'est pas circulaire, i.e. le diamètre de la section circulaire de même surface que la section considérée) compris entre 2 et 500 mm. Les cordons ou profilés peuvent être avantageusement enroulés sous forme de bobines ou éventuellement prédécoupés à la dimension voulue sous forme de cordons ou de rubans individualisés, si nécessaire. Les figures donnent des exemples de réalisation de cordons selon l'invention. Des couches supplémentaires outre celles indiquées (lorsque le cas est possible) peuvent être prévues (par ex. des couches externes de faible épaisseur avec des impressions, des couches de couleur, des couches de liant, etc...). De façon générale le cordon est plein mais il peut aussi être creux (avec une ou plusieurs lumières).

De façon générale, les cordons ou profilés selon l'invention sont préparés de façon classique par (co)extrusion ou enduction.

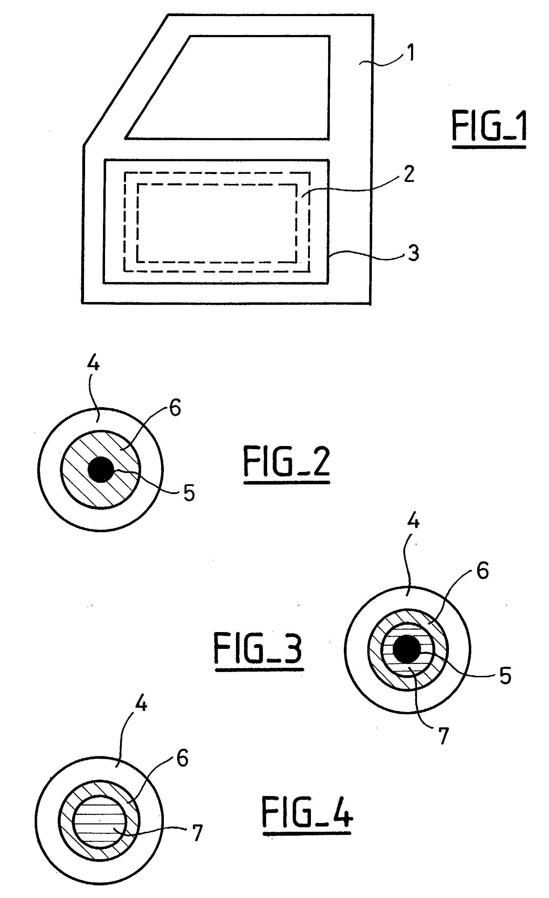

La figure 2 représente un premier type de cordon ou profilé susceptible d'être utilisé dans l'invention. Ce cordon comprend une peau extérieure 4 non tackante à froid constituée d'adhésif thermofusible ou HMA, et une couche intermédiaire 6 en auto-adhésif ou HMPSA sur une âme centrale 5. L'âme centrale, constituée d'un ou plusieurs matériaux, peut être un câble, une tresse, un ruban, un tube avec une ou plusieurs lumières, un profilé de section plus ou moins complexe, ces structures pouvant être revêtues ou non. L'âme centrale est choisie en fonction des propriétés et/ou éventuelles fonctions supplémentaires qu'elle peut apporter. Cette âme centrale 5 peut être constitué d'éléments métalliques, de plastiques (moussés ou non), de composites, de fibres animales, de fibres végétales, de fibres minérales, de fibres de carbone, etc... ou d'une combinaison de ces matériaux. Cette âme centrale offre certains avantages. On peut avoir une âme ductile en métal recuit (par ex. cuivre recuit) ce qui permet d'obtenir une âme métallique ductile permettant de donner toutes formes appropriées au cordon ou profilé lorsque l'utilisateur positionne ce dernier sur la pièce 1. Cette âme centrale permet aussi d'optimiser les conditions d'extrusion du cordon; elle permet un meilleur contrôle de la vitesse de ligne, généralement plus élevée qu'avec une structure équivalente sans âme, et une vitesse de refroidissement optimisé.

Dans le cas de cordons plats, on peut avoir plusieurs âmes distinctes (un peu à la façon de fils électriques à 2 ou plusieurs brins revêtus) le cas échéant. "Une âme centrale" couvre ce cas de figure.

L'âme centrale présente de préférence des caractéristiques de stabilité dimensionnelle en traction (ce qui permet d'accrocher, de tirer ou de contrôler la forme lors de l'utilisation) et/ou une bonne stabilité élongationnelle mais peut présenter une certaine élasticité transversale (dans ce dernier cas l'âme pouvant être composite avec éventuellement une mousse à cellules fermées et une tresse rigide ou une matière plastique non-moussée et une tresse rigide).

L'âme peut avoir toute forme appropriée, notamment celle homothétique du cordon ou profilé correspondant. De telles sections homothétiques permettent par exemple de contrôler le grammage d'adhésif et le positionnement des cordons et profilés lors de l'utilisation.

Quelle que soit la forme du cordon et profilé, le grammage total d'adhésif thermofusible (HMA) et d'auto-adhésif (HMPSA) est compris par exemple entre 10³ et 20.10³ g/m2 (surface extérieure âme centrale). L'épaisseur de la membrane protectrice extérieure ou peau en HMA est comprise par exemple entre 100 et 500 microns, de préférence entre 100 et 200 microns. Le rapport pondéral HMA(peau)/HMPSA n'excédant pas en général 10%.

Ce cordon ou profilé, utile de par la présence d'un auto-adhésif ou HMPSA en interne, est non-tackant jusqu'à 50°C voire 60°C de par la présence d'une peau en adhésif thermofusible ou HMA, ce qui permet de le manipuler avant activation sans qu'il n'adhère aux différents supports, aux outils de manutention, aux mains de l'opérateur, ou sur lui-même lors des opérations de transport et de stockage.

Ce type de cordon ou profilé, comme décrit précédemment, est particulièrement approprié dans les procédés utilisant une simple activation "de surface", l'auto-adhésif ou HMPSA sous la peau de HMA conservant un pouvoir collant à l'ambiante. Ce type de cordon ou profilé est aussi approprié pour tout type d'activation, notamment avec une fusion préalable et totale du film protecteur 4 en HMA, et plus ou moins totale du HMPSA.

Une description générale des adhésifs thermofusible (HMA) et auto-adhésifs (HMPSA) de l'invention est donnée ci-dessous. Ces adhésifs peuvent en outre contenir d'autres types de polymères que ceux listés. De façon très générale, et non limitative, les adhésifs thermofusibles ou HMA comprennent:
a) Polymères tels que EVA, PE, PP, EEA (éthylène éthylacrylate) et les élastomères thermoplastiques ou caoutchoucs (copolymères styréniques (blocs) du type Styrène-butadiène, styrène-isoprène, styrène-éthylène/butadiène, ou des polymères à base de butadiène tels que NBR ou encore des copolymères ethylène-propylène tels que EPR). Ils entrent de 5 à 50% dans la formulation et ont pour fonction d'assurer: l'adhérence (polarité), les propriétés barrières, la brillance, la résistance mécanique, la flexibilité et la régulation de la viscosité.
b) Résines (tackifiantes) qui peuvent être naturelles (Esters de colophane, Terpéniques ou Terpène-phénoliques), pétrolières, aliphatiques ou aromatiques. Elles entrent de 0 à 45% dans la formulation. Elles augmentent le tack à chaud, l'adhérence et régulent la cohésion.
c) Paraffines et cires qui peuvent entrer dans la formulation à un niveau de 20 à 80%. Elles ont un rôle au niveau des propriétés barrières, de la brillance, de la rigidité, du coût, du point goutte et de la dureté du Hot Melt.
d) Plastifiants qui peuvent entrer dans la formulation à un niveau compris entre 0 et 10%. Ils augmentent le tack à froid et régulent la souplesse et la viscosité du Hot Melt.
e) Anti-oxydants qui entrent de 0,2 à 10% dans la formulation. Ils stabilisent les composants à chaud et à froid.
f) Charges qui entrent dans la formulation lorsque l'on souhaite des propriétés particulières telles que la résistance aux UV (oxydation) , l'ignifugation, l'anti-allergie, la rhéologie, la déchirure dans l'épaisseur, etc..

A titre d'exemple les auto-adhésifs ou HMPSA, ayant à la température d'utilisation généralement comprise entre -20 et +40°C, un module élastique G' < 5.10⁵ Pa (critère de Dahlquist), sont constitué par exemple d'un mélange d'élastomère(s) et de résine tackifiante(s), on peut citer le mélange suivant :
- 40 à 80% d'élastomère thermoplastique;
- 20 à 60% de résine tackifiante;
- < 30% d'autres constituants : huile plastifiante, anti-oxydant, additifs, etc..

En fonction du choix des divers composants listés ci-dessus (polymères, résines tackifiantes), puis en réglant la nature, les teneurs respectives en cire(s) et/ou huile(s) ainsi que le ratio cire/huile, on peut régler la composition de sorte à avoir un HMA ou un HMPSA.

La figure 3 représente un second type de cordon ou profilé 2 susceptible d'être utilisé dans l'invention. Ce cordon ou profilé comprend une peau extérieure 4 en HMA, une couche intermédiaire en HMPSA 6 (du type ci-dessus) et une couche interne en polymère moussé 7 sur une âme centrale 5 (du type ci-dessus). Ce polymère moussé permet au cordon de trouver des applications dans le domaine des joints d'étanchéité, sans pour autant nécessiter un dispositif de mise en oeuvre compliqué et coûteux comme c'est le cas actuellement pour les joints moussés HMPUR (dans lesquels la mousse est formée in situ). La couche de mousse est du type par exemple polyuréthane, ou en polymère thermoplastique.

La figure 4 représente un troisième type de cordon ou profilé 2 susceptible d'être utilisé dans l'invention. Ce cordon ou profilé comprend une peau extérieure 4 en HMA, une couche intermédiaire en HMPSA 6 sur une âme en mousse 7. Par rapport au cordon objet de la figure 3, il n'y a pas l'âme centrale non-moussée; le reste est similaire.

Ces deux autres types de cordon ou profilé des figures 3 et 4 peuvent également être fabriqués aussi par co-extrusion.

Il convient de noter que la couche de HMPSA peut être moussée, par exemple lorsqu'un gaz inerte (par ex. azote) est injecté au niveau de l'extrusion.

L'invention n'est pas limitée aux modes de réalisation indiqués mais est susceptible de variantes aisément accessibles à l'homme du métier.

## Revendications

1. Procédé d'assemblage de deux pièces (1, 3) entre elles par collage, comprenant les étapes suivantes:
(i) fourniture de la première pièce (1); et
(ii) fourniture, sur ladite première pièce (1), d'un cordon ou profilé adhésif (2) comprenant en surface une peau d'adhésif thermofusible (HMA) non-tackante à froid; et
(iii) fourniture de la seconde pièce (3) et affichage sur ladite première pièce (1); et
(iv) avant, pendant ou après l'étape (iii) activation du cordon ou profilé adhésif (2) pour coller les pièces entre elles.

2. Procédé selon la revendication 1, dans lequel le cordon ou profilé adhésif (2) comprend du centre vers l'extérieur:
(i) une âme centrale (5);
(ii) une couche moussée (7);
(iii) une couche d'auto-adhésif ou HMPSA (6); et
(iv) une peau d'adhésif thermofusible ou HMA (4) non-tackante à froid.

3. Procédé selon la revendication 1, dans lequel le cordon ou profilé adhésif (2) comprend du centre vers l'extérieur:
(i) une âme centrale (5);
(ii) une couche d'auto-adhésif ou HMPSA (6); et
(iii) une peau d'adhésif thermofusible ou HMA (4) non-tackante à froid.

4. Procédé selon la revendication 1, dans lequel le cordon ou profilé adhésif (2) comprend du centre vers l'extérieur:
(i) une âme centrale moussée (7);
(ii) une couche d'auto-adhésif ou HMPSA (6); et
(iii) une peau d'adhésif thermofusible ou HMA (4) non-tackante à froid.

5. Procédé selon l'une des revendications 2 à 4, dans lequel l'âme centrale, revêtue ou non, est constituée d'un matériau métallique, plastique, animal, végétal, minéral, carboné ou d'un assemblage de ces matériaux.

6. Procédé selon la revendication 5, dans lequel l'âme centrale est métallique et ductile.

7. Procédé selon l'une des revendications 2 à 6, dans lequel l'âme centrale est un câble, un ruban, une tresse, un toron, un tube avec une ou plusieurs lumières, une structure moussée, ou un profilé de section plus ou moins complexe.

8. Procédé selon la revendication 1, dans lequel le cordon ou profilé adhésif (2) est constitué d'adhésif thermofusible (HMA) et d'auto-adhésif (HMPSA).

9. Procédé selon l'une des revendications 1 à 8, dans lequel le cordon ou profilé adhésif (2) est creux.

10. Procédé selon l'une des revendications 2 à 9, dans lequel la peau d'adhésif thermofusible ou HMA (4) est compatible et miscible à chaud avec la couche d'auto-adhésif ou HMPSA (6).

11. Procédé selon l'une quelconque des revendications 1 à 10, dans lequel l'étape d'activation est mise en oeuvre par soudure miroir.

12. Procédé selon l'une quelconque des revendications 1 à 10, dans lequel l'étape d'activation est mise en oeuvre par projection d'un fluide chaud.

13. Procédé selon l'une quelconque des revendications 1 à 10, dans lequel l'étape d'activation est mise en oeuvre par effet Joule ou induction.

14. Procédé selon l'une quelconque des revendications 1 à 10, dans lequel l'étape d'activation comprend la circulation d'un fluide chaud dans le cordon creux.

15. Procédé selon l'une quelconque des revendications 1 à 10, dans lequel l'étape d'activation est mise en oeuvre par perçage mécanique de la peau d'adhésif thermofusible ou HMA.

16. Procédé selon l'une quelconque des revendications 1 à 15, dans lequel l'étape d'activation est mise en oeuvre après l'étape (iii).

17. Cordon ou profilé adhésif (2) comprenant, du centre vers l'extérieur:
(i) une âme centrale (5);
(ii) une couche moussée (7);
(iii) une couche d'auto-adhésif ou HMPSA (6); et
(iv) une peau d'adhésif thermofusible ou HMA (4) non-tackante à froid.

18. Cordon ou profilé adhésif (2) comprenant, du centre vers l'extérieur:
(i) une âme centrale (5);
(ii) une couche d'auto-adhésif ou HMPSA (6); et
(iii) une peau d'adhésif thermofusible ou HMA (4) non-tackante à froid.

19. Cordon ou profilé adhésif (2) comprenant, du centre vers l'extérieur:
(i) une âme centrale moussée (7) ;
(ii) une couche d'auto-adhésif ou HMPSA (6); et
(iii) une peau d'adhésif thermofusible ou HMA (4) non-tackante à froid.

20. Cordon ou profilé adhésif (2) selon l'une des revendications 17 à 19, dans lequel l'âme centrale, revêtue ou non, est constituée d'un matériau métallique, plastique, animal, végétal, minéral, carboné ou d'un assemblage de ces matériaux.

21. Cordon ou profilé adhésif (2) selon la revendication 20, dans lequel l'âme centrale est métallique et ductile.

22. Cordon ou profilé adhésif (2) selon l'une des revendications 17 à 21, dans lequel l'âme centrale est un câble, un ruban, une tresse, un toron, un tube avec une ou plusieurs lumières, une structure moussée, ou un profilé de section plus ou moins complexe.

23. Cordon ou profilé adhésif (2) selon l'une des revendications 17 à 22, dans lequel le cordon ou profilé adhésif (2) est creux.

24. Cordon ou profilé adhésif (2) selon l'une des revendications 17 à 23, dans lequel la peau d'adhésif thermofusible ou HMA (4) est compatible et miscible à chaud avec la couche d'auto-adhésif ou HMPSA (6).

25. Cordon ou profilé adhésif (2) selon l'une des revendications 17 à 24, dans lequel l'âme centrale présente une section homothétique de celle du cordon ou profilé.

26. Cordon ou profilé adhésif (2) selon l'une des revendications 17 à 25, dans lequel le grammage total d'adhésif thermofusible (HMA) et d'auto-adhésif (HMPSA) est compris entre 10³ et 20.10³ g/m2.

27. Cordon ou profilé adhésif (2) selon l'une des revendications 17 à 26, dans lequel l'épaisseur de la peau en HMA (4) est comprise entre 100 et 500 microns, de préférence entre 100 et 200 microns.

28. Cordon ou profilé adhésif (2) selon l'une des revendications 17 à 27, dans lequel le rapport pondéral HMA(peau)/HMPSA n'excède pas 10 %.

29. Procédé de fabrication de cordon ou profilé adhésif (2) selon l'une des revendications 17 à 28, par (co)extrusion ou enduction.
